# EUROPÄISCHE PATENTSCHRIFT

(11) **EP 0 513 623 B1**
(45) Veröffentlichungstag und Bekanntmachung des Hinweises auf die Patenterteilung: **17.01.1996**
(21) Anmeldenummer: 92107533.9
(22) Anmeldetag: 04.05.1992
(51) Int. Cl.: B60P 3/16

(54) **Absetzbarer Auflieger**
Demountable vehicle body
Superstructure amovible de véhicules

(30) Priorität: 16.05.1991 DE 4115984
(43) Veröffentlichungstag der Anmeldung: 19.11.1992
(73) Patentinhaber: JOSEF BERGMEISTER GmbH & Co. BAUGESCHÄFT KG, D-82418 Murnau (DE)
(72) Erfinder: Bergmeister, Josef, Jun., W-8110 Murnau (DE)
(74) Vertreter: Flosdorff, Jürgen, Dr.

(56) Entgegenhaltungen:
- DE-A- 2 421 141
- DE-A- 3 145 975
- DE-B- 1 223 309
- DE-U- 7 414 936
- ENGINEERING MATERIALS AND DESIGN Bd. 18, Nr. 9, Oktober 1974, LONDON Seiten 36-37; 'Hydraulically operated detachable truck body combines heavy lift facility'

## Beschreibung

Die Erfindung betrifft einen insbesondere von einem Lastkraftwagen absetzbaren Auflieger, auf dem ein Trommelmischeraufbau befestigt sein kann. Die Erfindung ist jedoch auch auf andere Auflieger, die üblicherweise auch als Mulden bezeichnet werden, anwendbar, beispielsweise auf Sattelauflieger, wobei sie immer dann mit besonderem Vorteil anwendbar ist, wenn bei dem Auflieger bzw. der Mulde keine Verwindung der Auflageebene im abgesetzten Zustand auftreten soll oder darf. Im folgenden wird die Erfindung im Zusammenhang mit einem Auflieger beschrieben, auf dem ein Trommelmischeraufbau befestigt ist.

Die herkömmlichen Auflieger mit Trommelmischeraufbau sind zwar grundsätzlich von demzugehörigen Spezial-LKW absetzbar, jedoch werden sie während eines Betoniervorganges auf einer Baustelle nicht von dem LKW abgesetzt, da die Auflieger keine Stützen oder Ständer aufweisen, sondern flach abgesetzt werden müßten, wobei sich der schwenkbare Auslauf aus der Mischertrommel so dicht über dem Boden befinden würde, daß kein Aufnahmebehälter für den Beton unterhalb des Auslaufs angeordnet werden könnte. Aus diesem Grund ist es bisher üblich, daß der Auflieger während der Entnahme des Betons auf dem LKW verbleibt, so daß dieses Fahrzeug (samt Fahrer) während des Betoniervorganges auf der Baustelle steht, womit erhebliche Kosten verbunden sind.

Bei einem Auflieger mit Trommelmischeraufbau ist es sehr wichtig, daß sich die Auflagestellen für die einzelnen Bauteile des Trommelmischeraufbaus nicht zueinander verlagern oder zu verlagern trachten, was dann der Fall wäre, wenn sich der Auflieger verwinden würde. Die geneigt auf dem Auflieger gelagerte Trommel würde das sie haltende Lager nämlich in kürzester Zeit zerstören, wenn beim Absetzen des Aufliegers auf einen unebenen Untergrund eine Verwindung des Aufliegers stattfinden würde, die Verlagerungen im Bereich des Auflagers und/oder aus der Verwindung herrühende Spannungen in dem Lager hervorrufen würde. Diese Probleme sind bisher dadurch vermieden, daß der Auflieger beim Betoniervorgang -bei dem die Mischertrommel von einem zum Trommelmischeraufbau gehörenden Motor gedreht wird- auf dem zugehörigen LKW verbleibt.

Aus der DE-A 3 145 975 ist eine Hubeinrichtung bekannt, bei der jedes Stützbein mit einem zugehörigen elektrischen Stellmotor versehen ist. Die Stützbeine werden über eine besondere Steuerung so ausgefahren, daß die von den Stützen getragene Kabine ihre horizontale Ausrichtung beibehält.

Die Druckschrift "Engineering Materials and Design", Bd. 18, Nr. 9, Oktober 1974 offenbart einen absetzbaren Auflieger gemäß dem Oberbegriff des Patentanspruchs 1, der mit vier aus- und einfahrbaren Stützen versehen ist, die jeweils mit einem eigenen hydraulischen Antrieb ausgerüstet sind.

Der vorliegenden Erfindung liegt die Aufgabe zugrunde, einen Auflieger anzugeben, der so abgesetzt werden kann, daß eine Verwindung seiner einen Aufbau haltenden Ebene zuverlässig vermieden ist. Dies soll durch einen selbsttätigen Einstellmechanismus bewerkstellig werden, der einen einfachen Aufbau hat. Der Auflieger soll insbesondere für einen Trommelmischeraufbau geeignet sein und es ermöglichen, Beton aus der Mischertrommel im abgesetzten Zustand des Aufliegers zu entnehmen.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Der erfindungsgemäße Auflieger enthält vier Stützen bzw. Ständer, auf denen er im abgesetzten Zustand steht, und zwar ein vorderes, dem LKW-Fahrerhaus zugewandtes Ständerpaar und ein hinteres Ständerpaar, wobei sich die Länge bzw. Höhe wenigstens eines Ständerpaares beim Aufsetzen des Aufliegers selbsttätig derart einstellt, daß sich der Auflieger nicht verwindet.

Ferner ist vorgesehen, daß die Ständer, die beim Absetzen ihre Länge selbsttätig einstellen, jeweils eine hydraulische Kolben/Zylindereinheit aufweisen, die über eine Hydraulikleitung miteinander verbunden sind, die in weiterer Ausgestaltung der Erfindung mit einem Absperrhahn versehen sein kann. Diese Hydraulikanlage ermöglicht die Selbsteinstellung der Länge der Teleskopständer in der Weise, daß - bei geöffnetem Absperrhahn der Hydraulikleitung - der Kolben des zuerst in Bodenberührung geratenen Ständers in den zugehörigen Zylinder zurückgedrückt wird, wodurch die so verdrängte Hydraulikflüssigkeit den Kolben des anderen Ständers entsprechend ausfährt, bis auch der andere Ständer auf dem Boden aufruht. In diesem Zustand wird der Absperrhahn der Hydraulikleitung geschlossen, wodurch die beiden Ständer in ihrer jeweiligen Länge "verriegelt" sind.

Dieser selbsttätige Einstellmechanismus ist denkbar einfach und arbeitet absolut zuverlässig. Selbstverständlich kann diese Hydraulikanlage außerdem mit einer Pumpe und einem Hydraulikflüssigkeitstank versehen sein, wenn zusätzlich vorgesehen ist, daß die Ständer einzeln oder gemeinsam ausfahrbar oder einfahrbar sein sollen, wie dies z.B. bei einem Sattelauflieger der Fall ist. Zur Selbsteinstellung der Länge bzw. Höhe der Ständer zum verwindungsfreien Absetzen sind jedoch weder Pumpe noch Hydraulikflüssigkeitstank erforderlich.

Die Ausbildung ist vorzugsweise so getroffen, daß nur die beiden vorderen Ständer mit dem ihre Länge selbsttätig einstellenden Mechanismus versehen sind, während die beiden hinteren Ständer eine konstante Länge haben. In diesem Falle können die hinteren Ständer auf einfache Weise beispielsweise durch Vierkantrohre gebildet sein, die an einem Querträger des Aufliegers fest angebracht sind. Zweckmäßigerweise befinden sich am unteren Endbereich des hinteren Ständers Räder bzw. Rollen, die das Absetzen des Aufliegers sowie dessen Aufnahme auf den LKW erleichtern. Es liegt im Rahmen der Erfindung, daß auch das hintere Ständerpaar mit einer Hydraulikanlage ausgerüstet sein kann.

Da der erfindungsgemäße Auflieger im abgesetzten Zustand auf den Ständern steht, befindet sich der Auslauf der Mischertrommel in einer solchen Höhe, daß an einer Baustelle der im allgemeinen von einem Kran gehaltene Aufnahmebehälter bequem unter dem Auslauf angeordnet werden kann, um bei einem Betoniervorgang Beton aufzunehmen.

Bei dem erfindungsgemäßen Auflieger ist gewährleistet, daß sich dieser beim Absetzen nicht verwindet. Wenn die hinteren Ständer eine konstante Länge haben, werden sie beim Absetzvorgang zunächst auf den - auf einer Baustelle meist unebenen - Boden abgesetzt, wodurch je nach den Gegebeneheiten des Untergrundes entweder eine horizontale Lage der Auflieger-Ebene oder eine in Querrichtung geneigte Lage vorgegeben wird. Wenn dann der Absetzvorgang des Aufliegers so weit fortgeschritten ist, daß die vorderen Ständer in Bodennähe geraten, nehmen diese durch den erfindungsgemäß vorgesehenen, selbsttätigen Einstellmechanismus eine solche Länge an, daß keine Verwindung auftritt. Dies vollzieht sich bei unebener Aufstandsfläche in der Weise, daß ein zuerst auf den Boden auftreffender Ständer teleskopartig eingefahren wird, während gleichzeitig der andere Ständer des vorderen Ständerpaares entsprechend ausgefahren wird, bis beide Ständer auf dem Boden aufruhen. Hierdurch wird die auf den Ständern gehaltene Auflagefläche bzw. Auflageebene praktisch verwindungsfrei gehalten.

Es wird betont, daß es durchaus im Rahmen der Erfindung liegt, daß auch die beiden hinteren Ständer mit dem Mechanismus zur selbsttätigen Einstellung der Länge bzw. Höhe der Ständer versehen sein können, womit erreicht werden kann, daß ein in horizontaler Lage von einem zugehörigen Spezial-LKW abgesetzter Auflieger auch auf unebenem, z.B. quer geneigten Untergrund eine horizontale Lage einnehmen kann. Das andere Teleskopständerpaar gewährleistet dann wiederum den verwindungsfreien Zustand des vollständig abgesetzten Aufliegers.

Gemäß der Erfindung ist ferner vorgesehen, daß die Kolben/Zylindereinheit in einem Schenkel eines Vierkantwinkelrohrs angeordnet ist, dessen vorzugsweise um 90° abgewinkelter anderer Schenkel verschieblich in einem weiteren Vierkantrohr sitzt, welches einen Querträger des Aufliegers bildet. Der Schenkel des Vierkantwinkelrohrs sitzt im wesentlichen formschlüssig, d.h. mit einem seine Verschiebung zulassenden, geringen Spiel in dem Querträger, wobei beide Träger vorzugsweise eine quadratische Querschnittsform haben.

Mit großem Vorzug ist ferner vorgesehen, daß die vorderen Ständer um die Längsachse des Querträgers drehbar angeordnet sind, damit sie während des Transports des Aufliegers auf dem LKW nach oben verschwenkt werden können. Hierzu wird vorgeschlagen, daß sich der in den Querträger eingreifende Schenkel des Vierkantwinkelrohrs in einem zylindrischen Ansatz fortsetzt, dessen Außendurchmesser ebenfalls im wesentlichen mit dem Innenwandabschnitt des Vierkantrohrs übereinstimmt. Zum Verschwenken des Ständers wird dieser seitlich soweit aus dem Querträger herausgezogen, bis sich nur noch der zylindrische Ansatz in dem querschnittlich quadratischen Querträger befindet, wobei diese Position durch einen Anschlag begrenzt sein kann. Der zylindrische Ansatz läßt nun das Verschwenken des Ständers -vorzugsweise um 180°- zu, woraufhin der anschließende Vierkantschenkel wieder in den Querträger eingeschoben wird, womit der Ständer wieder verdrehsicher gehalten ist.

Damit die Kolben der Kolben-Zylindereinheiten nicht durch das Absetzen des Aufliegers beschädigt werden, wird ferner vorgeschlagen, daß jeder Kolben mit einem weiteren, verschieblich in dem Vierkantwinkelrohr sitzenden Vierkantrohr verbunden ist, das auf den Boden aufgesetzt wird. Dieses Vierkantrohr folgt stets der Bewegung des Kolbens.

Gemäß der vorliegenden Erfindung ist demnach vorgesehen, daß die Ständer wenigstens eines in der Länge variablen Ständerpaars jeweils eine hydraulische Kolben/Zylindereinheit aufweisen, die über eine Hydraulikleitung miteinander verbunden sind, die mit einem Absperrhahn versehen ist. Der erfindungsgemäße Auflieger wird in der Weise abgesetzt, daß zunächst die beiden hinteren Ständer und dann die beiden vorderen Ständer auf den Boden aufgesetzt werden, wie dies bei Aufliegern der betrachteten Art häufig anzutreffen ist. Das wenigstens eine Ständerpaar variabler Länge wird dabei bei geöffnetem Absperrhahn seiner die beiden hydraulischen Kolben/Zylindereinheiten verbindenden Hydraulikleitung aufgesetzt, wobei sich selbsttätig die Länge der beiden Ständer so einstellt, daß sich die den Aufbau haltende Muldenfläche nicht verwindet. Dies vollzieht sich bei unebener Aufstandsfläche derart, daß der zuerst auf den Boden auftreffende Ständer des Ständerpaars variabler Länge teleskopartig eingefahren wird, während gleichzeitig der andere Ständer entsprechend ausgefahren wird, bis beide Ständer auf dem Boden aufruhen. Dieser Selbsteinstellmechanismus verhindert zuverlässig eine nennenswerte Verwindung des Aufliegers, die insbesondere bei einem Trommelmischeraufbau mit erheblichen Nachteilen verbunden wäre, einschließlich einer Zerstörung des die Trommel haltenden Lagers.

Gemäß der Erfindung ist mit einfachen Mitteln erreicht, daß sich die Länge der beiden Ständer eines Ständerpaars entsprechend eventueller Unebenheiten der Aufstandsfläche in der Weise frei einstellt, daß sich die Tragfläche des Aufliegers nicht verwindet.

Weitere Merkmale, Vorteile und Einzelheiten der Erfindung ergeben sich aus der nachfolgenden Beschreibung einer bevorzugten Ausführungsform der Erfindung sowie anhand der Zeichnung.
Dabei zeigen:
- Fig. 1: einen von einem zugehörigen LKW abgesetzten erfindungsgemäßen Auflieger mit Trommelmischeraufbau;
- Fig. 2: den Auflieger gemäß Fig. 1 in einem auf den LKW aufgesetzten Zustand und
- Fig. 3: eine schematische Ansicht des vorderen Ständerpaars in einer vergrößerten Darstellung.

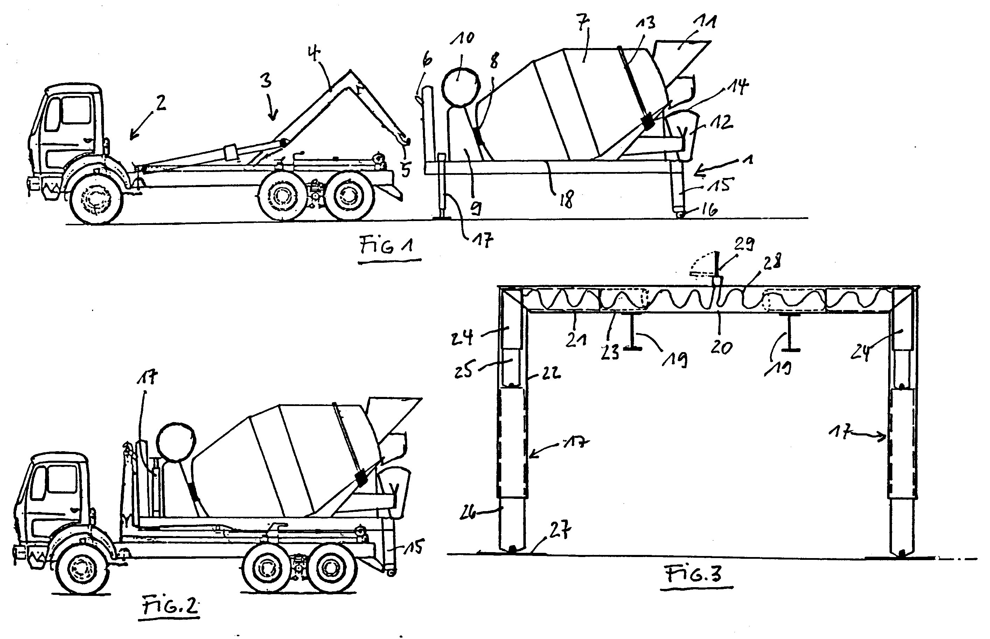

Fig. 1 zeigt einen Zustand, in dem ein Auflieger bzw. eine Mulde 1 mit einem Trommelmischeraufbau im abgesetzten Zustand hinter einem zugehörigen Spezial-LKW 2 steht, der eine allgemein mit 3 bezeichnete Hydraulikanlage zum Absetzen und Aufnehmen des Aufliegers 3 hat, deren Einzelheiten hier nicht von Interesse sind. Es sei lediglich erwähnt, daß an einem Schwenkarm 4 ein Haken 5 angeformt ist, der in ein am vorderen Endbereich des Aufliegers 1 angeordnetes Bauteil 6 eingreifen kann.

Der Trommelmischeraufbau des dargestellten Aufliegers 1 besteht im wesentlichen aus der in geneigter Stellung angeordneten Mischertrommel 7, die auf einem Lager 8 einer vorderen Halterung 9 gelagert ist, welch letztere auch einen nicht dargestellten Motor zum Drehen der Mischertrommel 7 enthält. Mit 10 ist ein Wasserbehälter bezeichnet.

Zum Befüllen der Mischertrommel 7 ist ein Trichter 11 angeordnet, unter dem sich ein schwenkbarer Auslauf 12 für den aus der Mischertrommel zu entnehmenden Beton befindet. Hierzu wird unterhalb des schwenkbaren Auslaufs ein Aufnahmebehälter für den Beton angeordnet.

Die Mischertrommel 7 enthält ferner einen Laufring 13 sowie eine Laufrolle 14 für diesen Laufring.

Der Auflieger 1 steht auf zwei hinteren Ständern 15, die eine konstante Länge haben und an ih rem unteren Ende mit Rädern 16 versehen sind, sowie auf zwei vorderen Ständern 17, deren Länge verstellbar ist. Die Ständer 17 nehmen beim Absetzen des Aufliegers 1 selbsttätig eine solche Länge ein, daß eine durch die Linie 18 in Fig. 1 angedeutete Ebene im abgesetzten Zustand des Aufliegers 1 verwindungsfrei eben bleibt.

Hierzu ist ein Mechanismus zur selbsttätigen Einstellung der Länge der beiden Ständer 17 vorgesehen, der nachfolgend im Zusammenhang mit Fig. 3 näher beschrieben wird. Fig. 3 läßt erkennen, daß der Auflieger 1 in Längsrichtung verlaufende Tragelemente 19 aufweist, auf denen ein Vierkantrohr 20 befestigt ist, das einen im Querschnitt quadratischen Querträger des Aufliegers 1 bildet. In die seitlichen Endbereiche des Querträgers 20 greift jweils ein Schenkel 21 eines Vierkantwinkelrohres 22 ein, welches etwas kleinere Querschnittsabmessungen hat, so daß der Schenkel 21 verschieblich in dem Querträger 20 sitzt. Der Schenkel 21 setzt sich in einem zylindrischen Rohrabschnitt 23 fort, dessen Funktion weiter unten erläutert wird.

Innerhalb des Vierkantwinkelrohres 22 sind ein Hydraulikzylinder 24 mit einem Kolben 25 sowie ein weiteres Vierkantrohr 26 angeordnet, welches mit demKolben 25 verbunden ist und im wesentlichen ohne Spiel verschieblich in dem äußeren Vierkantrohr 22 sitzt. An dem unteren Ende ist das Vierkantrohr 26 mit einer Platte 27 zum Aufsetzen auf den Boden verbunden.

Die beiden Zylinder 24 sind mittels einer Hydraulikleitung 28 miteinander verbunden, die einen Absperrhahn 29 aufweist.

Wenn der Auflieger von dem Fahrzeug 2 abgesetzt wird, geschieht dies bei zunächst geöffnetem Absperrhahn 29. Wenn im Verlaufe des Absetzvorgangs ein Ständer 17 Bodenkontakt erhält, während der andere Ständer 17 noch vom Boden beabstandet ist, wird das Vierkantrohr 26 zusammen mit demKolben 25 in den Zylinder 24 eingefahren, wobei die hierdurch verdrängte Hydraulikflüssigkeit den Kolben 25 des anderen Ständers 17 ausfährt, wodurch dieser teleskopartig verlängert wird, bis auch er auf dem Boden aufruht. Anschließend wird der Absperrhahn 29 geschlossen, wodurch die Ständer 17 in ihrer Länge verriegelt sind.

Zum Transport des Aufliegers 1 auf dem Fahrzeug 2 können die Telekopständer 17 nach oben verschwenkt werden, wie Fig. 2 zeigt. Hierzu werden die Ständer 17 so weit seitlich aus dem Querträger 20 herausgezogen, bis sich nur noch die zylindrischen Rohrstücke 23 innerhalb des quadratischen Vierkantrohres 20 befinden, wodurch eine Drehung der Ständer 17 in die in Figur 2 dargestellte Stellung ermöglicht ist. Wenn anschließend die Schenkel 21 der Ständer 17 in die Position gemäß Fig. 3 eingeschoben werden, ist die Winkellage der Ständer 17 durch den im wesentlichen formschlüssigen Eingriff des Schenkels 21 in den quadratischen Querträger 20 verriegelt.

Die hinteren Ständer 15 können beim Transport in ihrer nach unten weisenden Stellung verbleiben. Alternativ hierzu können auch sie schwenkbar befestigt sein.

## Patentansprüche

1. Absetzbarer Auflieger, auf dem insbesondere ein Trommelmischeraufbau befestigt ist, wobei der Auflieger (1) ein vorderes und ein hinteres Ständerpaar (17, 15) aufweist, und sich die Länge wenigstens eines Ständerpaares (17) beim Absetzen des Aufliegers (1) selbsttätig derart einstellt, daß sich der Auflieger nicht verwindet,
**dadurch gekennzeichnet**,
daß die Ständer (17) wenigstens eines Ständerpaares jeweils eine hydraulische Kolben/Zylindereinheit (24, 25) aufweisen, die über eine Hydraulikleitung (28) miteinander verbunden sind, wobei die Kolben (25) die jeweilige Länge der Ständer (17) selbsttätig einstellen.

2. Auflieger nach Anspruch 1,
dadurch gekennzeichnet, daß die beiden vorderen Ständer (17) eine variable Länge aufweisen.

3. Auflieger nach Anspruch 1 oder 2,
dadurch gekennzeichnet, daß die beiden hinteren Ständer (15) eine konstante Länge haben.

4. Auflieger nach Anspruch 1 oder 2,
dadurch gekennzeichnet, daß auch die beiden hinteren Ständer eine variable Länge aufweisen.

5. Auflieger nach Anspruch 1,
dadurch gekennzeichnet, daß die Hydraulikleitung (28) mit einem Absperrhahn (29) versehen ist, der beim Aufsetzen des Ständerpaars geöffnet ist.

6. Auflieger nach einem der Ansprüche 1 bis 5,
dadurch gekennzeichnet, daß die Kolben/Zylindereinheit (24, 25) in einem Schenkel eines Vierkantwinkelrohrs (22) angeordnet ist, dessen anderer Schenkel (21) verschieblich in einem Vierkantrohr (20) sitzt, daß einen Querträger des Aufliegers (1) bildet.

7. Auflieger nach Anspruch 6,
dadurch gekennzeichnet, daß der andere Schenkel (21) mit einem zylindrischen Ansatz (23) versehen ist, dessen Außendurchmesser im wesentlichen dem Innenwandabstand des Vierkantrohrs (20) entspricht.

8. Auflieger nach einem der Ansprüche 1 bis 7,
dadurch gekennzeichnet, daß der Kolben (25) mit einem weiteren, verschieblich in dem Vierkantwinkelrohr (22) sitzenden Vierkantrohr (26) verbunden ist, das auf den Boden aufgesetzt wird.

9. Auflieger nach einem der Ansprüche 1 bis 8,
dadurch gekennzeichnet, daß die Hydraulikanlage ferner mit einer Pumpe und einem Hydraulikflüssigkeitstank versehen ist, so daß die Ständer einzeln oder gemeinsam ausfahrbar oder einfahrbar sind.

## Claims

1. Demountable vehicle body, especially to which in particular a double drum mixer construction is secured, wherein the vehicle body (1) has a front pair and a rear pair of posts, and the length of at least one of the post pairs (17) is automatically adjusted on demounting the vehicle body (1) in such a manner that the post is not distorted,
**characterised in that**
the post (17) of at least one post pairs has a respective hydraulic piston-and-cylinder unit (24, 25) which are connected together via a hydraulic line (28), wherein the pistons (25) automatically adjust the instantaneous length of the post (17).

2. A demountable body according to claim 1,
**characterised in that**
the two front posts (17) are of a variable length.

3. A demountable body according to claim 1 or 2,
**characterised in that**
the two rear posts (15) are of a constant length.

4. A demountable body according to claim 1 or 2,
**characterised in that**
the two rear posts are also of variable length.

5. A demountable body according to claim 1,
**characterised in that**
the hydraulic line (28) is provided with a shut-off cock (29) which is open on erecting the pair of posts.

6. A demountable body according to any one of claims 1 to 5,
**characterised in that**
the piston-and-cylinder unit (24, 25) is arranged in a limb of a square cross-section tube (22) the other limb (21) of which is displaceably seated in a square cross-section tube (20) that forms a transverse carrier of the demountable body (1).

7. A demountable body according to claim 6,
**characterised in that**
the other limb (21) is provided with a cylindrical extension (23) the outer diameter of which essentially corresponds with the internal wall spacing of the square cross-section tube (20).

8. A demountable body according to any one of claims 1 to 7,
**characterised in that**
the piston (25) is connected with a further square cross-section tube (26) which is seated in the square cross-section tube (22) and which is mounted on the ground.

9. A demountable body according to any one of claims 1 to 8,
**characterised in that**
the hydraulic apparatus is further provided with a pump and a tank for hydraulic liquid so that the posts may be extendable or retractable individually or together.

## Revendications

1. Superstructure amovible de véhicules, sur laquelle est fixée en particulier une structure de malaxeur à tambour, la superstructure (1) présentant une paire de montants avant et une paire de montants arrière (17, 15), et la longueur d'au moins une paire de montants (17) se réglant automatiquement lors du dépôt de la superstructure (1) de telle façon que la superstructure ne se déforme pas,
caractérisée en ce que les montants (17) d'au moins une paire de montants présentent respectivement une unité hydraulique piston/vérin, qui sont reliés entre eux par une conduite hydraulique (28), les pistons (25) réglant automatiquement la longueur respective des montants (17).

2. Superstructure selon la revendication 1, caractérisée en ce que les deux montants avant (17) présentent une longueur variable.

3. Superstructure selon la revendication 1 ou 2, caractérisée en ce que les deux montants arrière (15) ont une longueur constante.

4. Superstructure selon la revendication 1 ou 2, caractérisée en ce que les deux montants arrière présentent également une longueur variable.

5. Superstructure selon la revendication 1, caractérisée en ce que la conduite hydraulique (28) est munie d'un robinet d'arrêt (29) qui est ouvert lors de la pose de la paire de montants.

6. Superstructure selon l'une quelconque des revendications 1 à 5, caractérisée en ce que l'unité piston/vérin (24, 25) est disposée dans une branche d'un tube coudé carré (22) dont l'autre branche (21) est logée de façon coulissante dans un tuyau carré (20) qui forme une traverse de la superstructure (1).

7. Superstructure selon la revendication 6, caractérisée en ce que l'autre branche (21) est munie d'une embase cylindrique (23) dont le diamètre extérieur correspond pour l'essentiel à la distance entre parois internes du tube carré (20).

8. Superstructure selon l'une quelconque des revendications 1 à 7, caractérisée en ce que le piston (25) est relié à un autre tube carré (26) logé de façon coulissante dans le tube coudé carré (22) que l'on pose sur le sol.

9. Superstructure selon l'une quelconque des revendications 1 à 8, caractérisée en ce que l'installation hydraulique est également munie d'une pompe et d'un réservoir de liquide hydraulique, de sorte que les montants peuvent être déployés ou rentrés individuellement ou ensemble.
